# EUROPEAN PATENT SPECIFICATION

(11) **EP 2 124 171 B1**
(45) Date of publication and mention of the grant of the patent: **01.08.2012**
(21) Application number: 08156766.1
(22) Date of filing: 22.05.2008
(51) Int. Cl.: G06K 19/067

(54) **Tagging methods and apparatus**
Etikettierverfahren und Vorrichtung
Procédés d'étiquetage et appareil

(43) Date of publication of application: 25.11.2009
(73) Proprietor: Bluechiip Ltd, Scoresby VIC 3179 (AU)
(72) Inventor: Chaffey, Jason, Box Hill South, Victoria 3128 (AU)
(74) Representative: Gillard, Matthew Paul

(56) References cited:
- WO-A-2004/084131
- WO-A-2008/061313

## Description

The present invention relates to tagging methods and apparatus. It relates particularly to the tagging of items that are subjected to ionizing radiation in a non-sterile environment.

In order to identify items, it is known to assign them a serial number, a barcode or a data matrix (a 2D barcode). This number or code may be engraved into the items or added to them as labels, and can be used in tracking systems to track the items before, during and after manufacture. Such tracking systems can still however be labour intensive, as even though a barcode may be machine readable, it requires line-of-sight reading, and for example will generally need to be manually held in a suitable reading position. Barcodes that are printed on address labels are known to delaminate on exposure to harsh environments such as motors. Other barcodes can be screwed on, but the barcode pattern can degrade with time or even be removed.

RFID tags have started to replace barcodes in some applications, and have a number of advantages. For example, RFID tags do not require line-of-sight reading, are quick to read, may hold more information than a barcode, and may be read/write devices. RFID tags generally comprise a microprocessor for holding data and an antenna for communications with an RFID interrogator through an RF interrogation signal. The tags may be passive, in which case they receive their power from the interrogation signal, or may be active, in which case they include a battery.

However, the use of such RFID tags is not always possible, due to the environment in which the items are used. For example, x-ray inspection systems are used to detect flaws in the internal construction of automotive tyres, sections of railway track, propeller shafts, turbine blades and other items including metallurgical components. It is often necessary to affix a tag to items, in order that the item can be identified during the inspection process. However, electronic RFID tags including a microprocessor and associated data storage device are unsuited to this application. The x-rays used during the inspection process cause damage to or the malfunctioning of the electronic components on the RFID tag.

In addition to x-rays, examples of ionizing radiation include, but are not limited to, energetic beta particles, neutrons and alpha particles. The ability of light waves (photons) to ionize an atom or molecule varies across the electromagnetic spectrum. X-rays, gamma rays and far ultraviolet light will all ionize many atoms and molecules in electronic circuitry, whilst very few atoms or molecules will be ionized by visible light and microwaves.

Two fundamental damage mechanisms take place, namely lattice displacement and ionization effects. Lattice displacement is caused by neutrons, protons, alpha particles, heavy ions, and very high energy gamma photons. They change the arrangement of the atoms in the lattice, creating lasting damage, and increasing the number of recombination centers, depleting the minority carriers and worsening the analog properties of affected semiconductor junctions.

Ionization effects are caused by charged particles, including the ones with energy too low to cause lattice effects. The ionization effects are usually transient, creating glitches and soft errors, but can lead to destruction of the device if they trigger other damage mechanisms, such as a latch-up. Photocurrent caused by ultraviolet and x-ray radiation may belong to this category as well. Gradual accumulation of holes in the oxide layer in MOSFET transistors leads to worsening of their performance, up to device failure when the dose is high enough.

The presence of ionizing radiation would also be a particularly serious problem in designing electronic RFID tags to identify items subject to ionizing radiation in non-sterile environments, such as items intended for use with or forming at least part of artificial satellites, spacecraft, aircraft, nuclear power stations and nuclear weapons. Manufacturers of electronic RFID tags for use in such non-sterile environments would therefore need to employ various methods of radiation hardening to use such tags. These methods are generally expensive and not always reliable.

Accordingly, one aspect of the invention provides a method of identifying an item, the method including the steps of:
applying an RFID tagging device to the item, said tagging device including a data store formed from an array of micromechanical resonant members, said resonant members being configured to vibrate in accordance with an applied RF signal, so as to provide a data response;
subjecting the item to ionizing radiation in a non-sterile environment; and
reading the data response from the RFID tagging device.

The ionizing radiation may include any one or more of x-rays, gamma rays, beta particles, neutrons and alpha particles.

The resonant members are preferably configured for vibration under a Lorentz force.

Similarly, the RFID device may be encased in an irradiation resistant outer cover.

The RFID device may further include support circuitry for said resonant members formed from irradiation resistant components.

Another aspect of the invention provides a system of tracking RFID tagged items through a process in which subjecting each item is subject to ionizing radiation in a non-sterile environment, the system including an inventory controller in communication with one or more RFID readers for reading said tagged items, wherein said items are tagged by RFID devices, and the RFID device including a data store formed by micromechanical resonant members that respond to an applied RF interrogation signal with a data response.

A further aspect of the invention provides a system of inspecting an item, including:
a radiation emitter for applying ionizing radiation to the item;
a radiation analyser for receiving and analysing radiation applied to the item; and
a system of tracking RFID tagged items as described hereabove.

The micromechanical resonant members are fabricated using MEMS technology (microelectromechanical systems technology), which is also known as MST (Micro System Technology) and micromachining. MEMS technology includes fabrication technologies for integrated circuits, and technologies specifically developed for micromachining. It generally relates to the fabrication of components with dimensions in the range of micrometers to millimeters. MEMS techniques may include for example masking, deposition and etching steps, amongst other well-known lithographic and micromachining processes. It may include for example photolithography and thin film deposition or growth.
Typically, the process results in a laminate structure. A number of structural layers can be formed on a substrate, and required components can be formed by selective etching of the substrate and/or sacrificial materials and component materials deposited thereon. The resulting micromachined components may be combined with electronics that are fabricated using standard integrated circuit processes.

The resonant members of the array may take the form of cantilever or bridge structures, and may have different resonant frequencies from one another so that they may respond to different frequency components of an excitation/interrogation signal. The presence or absence of a resonant member of a particular frequency and its ability to vibrate may be equated to a logical "1" or "0", and may represent a binary code, a status flag or the like. A determination of the presence or absence of a vibratable member may be made by applying an excitation signal to the array at a number of different frequencies, and by analysing a response to determine if it is indicative of a resonant member of a particular frequency.

Data may be encoded into these arrays in a number of ways, e.g. by fabricating members only of particular frequencies, by making members with a full range of frequencies and by then destroying particular members, or by enabling or disabling the ability of particular members to vibrate, e.g. by using a removable tether such as a fusible link.

The present invention enables items to be tagged in an RFID readable manner whilst still enabling them to be subjected to ionizing radiation in a non-sterile environment. This is because the use of the resonant members as data storage devices can remove the need for microprocessors, memory and associated circuitry which are vulnerable to ionizing radiation.

Resonant members that may be used in the present invention are disclosed in WO 2004/084131 and WO 2004/083798, both to the inventor of the present application. The former describes a number of possible resonant member constructions, whilst the latter discloses sensing devices that may record temperatures and the like, and may provide added benefit to the tagging system by allowing temperature tracking and the like.

Resonant members are also disclosed in US 5481102, US 5552778, US 5563583, US 5565847 and US 6819246, and the contents of these documents, and of WO 2004/084131 and WO 2004/083798, are incorporated herein in their entirety by reference.

A particularly preferred form of resonant member is one that vibrates under the Lorentz force. This has the advantage of simple construction, and also may be used with irradiation hard support circuitry, e.g. signal coupling circuitry. For example, the micromechanical resonant members may be associated with a simple antenna and conductor circuit.

As well as signal coupling circuitry, the support circuitry may include addressing circuitry, e.g. for programming or encoding the array, e.g. by fusing tethers that hold the resonant members against vibration. This addressing circuitry may also be autoclave and gamma-ray resistant, and in one preferred form includes a diode addressing array, where the diodes are formed as Schottky diodes. The support circuitry may also include resistors, capacitors and inductors. The addressing array may for example take a form as disclosed in co-pending International Patent Application PCT/AU2007/001800 entitled "Addressing Apparatus and Methods".

Encoding need not use an addressable array, and could occur for example by fabricating only certain resonant members, by destroying certain resonant members, and/or by removing restraining tethers using a numerically controlled laser beam or a laser beam and mask.

The micromechanical resonant members may be provided in vacuum compartments in an array housing or the like, which may then be packaged within a protective casing. The casing may also enclose an antenna, which may be separate from the housing. The resonant member array may for example be made on a silicon substrate with a silicon cover, and may be encased in a heat and radiation resistant polymer.

The RFID tag may be incorporated into the tagged item in any suitable manner, and may be included in the item during or after manufacture. It may for example be adhered to the item, moulded with the item or mechanically fastened to the item by a fixing element of some type. The method of attachment should resist failure due to ionizing radiation. The item may be tagged directly and/or a tag may be applied to a container or wrap in which the item is provided.

It should be noted that any one of the aspects mentioned above may include any of the features of any of the other aspects mentioned above and may include any of the features of any of the embodiments described below, as appropriate.

Embodiments of the present invention will now be described, by way of example only, with reference to the accompanying drawings. It is to be understood that the particularity of the drawings does not supersede the generality of the preceding description of the invention. In the drawings:
Figure 1 is a schematic diagram of an exemplary item inspection system;
Figure 2 is a plan view of a radiation detector forming part of the item inspection system of Figure 1;
Figure 3 is a schematic diagram of a tagging device; and
Figure 4 is a schematic section through a tagging device.

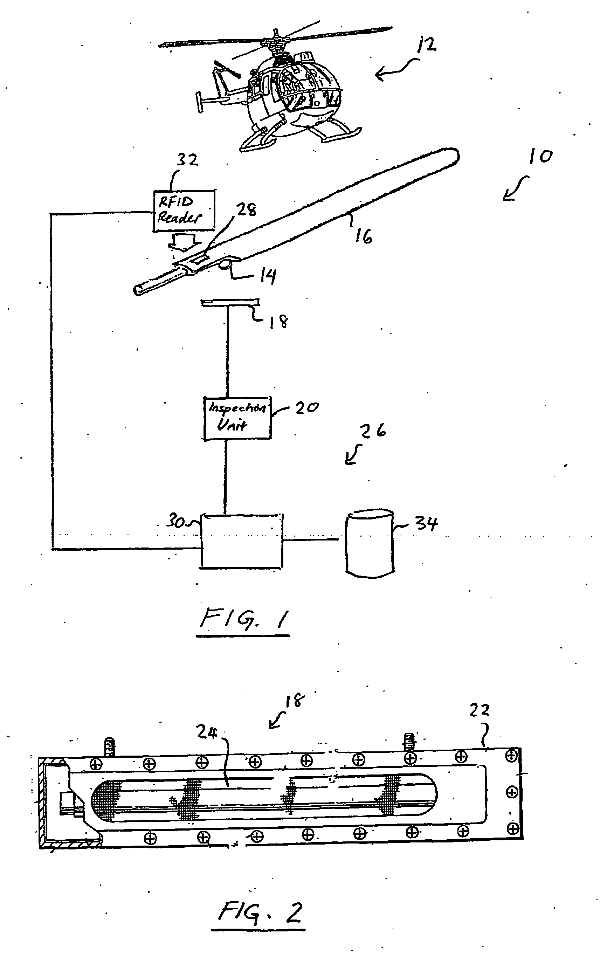

Aircraft blades are subject to severe stress and occasionally develop minute cracks. It is of critical importance that a crack in the blade be detected at an early time so that the blade may be replaced preventing an in-flight accident. Figure 1 shows schematically an aircraft blade inspection system 10 for inspecting rotor blades intended for use with a helicopter 12. During routine helicopter maintenance, the rotor blades are removed from the helicopter 12 and are inspected via the inspection system 10. A pressure sensor 14 with a beta radiation source is mounted in each blade 16. The inspection system 10 includes a beta radiation detector 18 adapted to receive beta radiation from the beta radiation source within the pressure sensor 14 during inspection of the blade 16. The inspection system 10 also includes an inspection unit 20 containing electronic circuitry.

The pressure sensor 14 includes a member which moves as a function of the pressure within the blade 16 on which the sensor 14 is mounted. A beta radiation source is carried within the moving member and the member has a window which is blocked when the pressure on the blade 16 is in an acceptable range. If the pressure within the blade 16 reaches an unacceptable range, thereby indicating leakage through a crack in the blade 16, the member moves, unblocking the window such that radiation passes through the window and is detected by the beta radiation detector 18. Such a pressure sensor is described in United States Patent No. 3,985,318.

As shown in Figure 2, the beta radiation detector 18 includes a housing 22 in which is mounted a Geiger-Mueller tube 24. In operation, the beta particles from the source in the pressure sensor 14 pass through the housing 22 to the tube 24 when the sensor 14 passes over the detector 18. The electronic circuitry in the inspection unit 20 receives an output signal from the tube 24 indicative of the presence or absence of one or more cracks in the blade 16.

The blade inspection system 10 also includes an RFID tracking system 26 for identifying and tracking the various blades inspected. The tracking system 26 can notably monitor when and which blades have been inspected for defects. This may be done by tagging each blade with an RFID tag 28 and by having a central controller 30 in communication with an RFID interrogator 32 provided at an appropriate location. Blades that have passed through inspection can be interrogated by the interrogator 32, and the data response of the RFID tag 28 can then be read and can be recorded by the central controller 30 in a database 34.

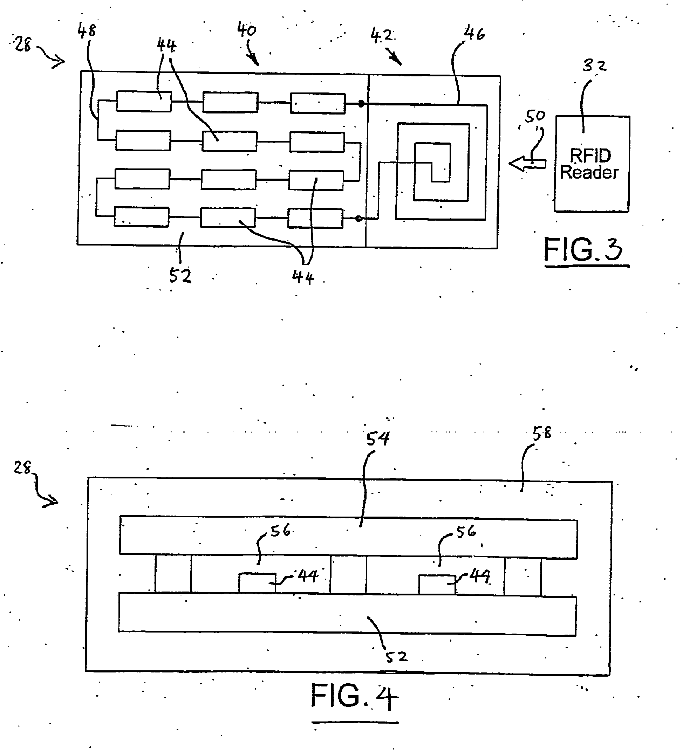

The RFID tag 28 includes data arrays formed of micromechanical resonant members. As shown in Figure 3, the tag 28 comprises a data portion 40 and a support circuitry portion 42. The data portion 40 comprises an array of resonant members 44 that have different resonant frequencies from one another and that are connected to the support circuitry 42, including an antenna 46, by a common conductor 48.

In use, the RFID reader/interrogator 32 applies an excitation signal 50 to the antenna 46, and this induces AC current in the conductor 48. If the frequency of the AC current corresponds to the resonant frequency of a resonant member 44, the resonant member 44 will vibrate. This causes a corresponding change in impedance of the antenna circuit 42 that is reflected back to the interrogator 32. Thus, if a swept frequency interrogation signal or the like is applied to a tag 28, the tag 28 responses can be used to identify which resonant members 44 exist and are free to vibrate, and the system can derive data from this. For example, at any particular frequency, the vibration of a resonating member 44 may indicate a "1" and the absence may indicate a "0".

Thus, the tag 28 may be encoded by making only certain ones of the resonant members 44 or by making them all and by then destroying selected members or by enabling or disabling them for vibration. For example, the resonant members 44 may be held against vibration by tethers, and may be encoded by removing selected tethers to allow selected ones of the resonant members 44 to vibrate. The resonant members 44 could also represent other data, e.g. status flags or the like.

The resonant members 44 could be bridge and/or cantilever structures, and could have tethers that are fusible by laser ablation, an electrical current or in some other manner. They could take any of the forms discussed in WO 2004/084131 and WO 2004/083798.

In one preferred form, the resonant members 44 are vibrated by the Lorentz force, and the excitation signal is applied to the resonant members 44 at the same time as a magnetic field is applied perpendicularly to the ac current induced in the conductor 48. The field could for example be applied externally or internally by magnetic elements mounted in the tag 28.

The resonant members 44 may be formed on a silicon substrate 52, which, as shown in Fig. 3, may be bound to a further silicon substrate 54 to form vacuum enclosures 56 for the resonant members 44. The whole silicon structure and the support circuitry 42 may be placed within a protective housing 58 for both protection and handling purposes.

The use of the resonant members 44 as data carriers allows the RFID tag 28 to withstand beta radiation inadvertently received from the source in the pressure sensor 14, whilst remaining compact in size and allowing for RF communication. It does away with the need for vulnerable microprocessors and CMOS circuitry.

The protective housing 58 that encases the silicon housing may be made from suitably robust forms of epoxy or other polymer materials, and the support circuitry 42 may merely comprise the antenna 46 and a conductor.

The support circuitry 42 may also comprise addressing circuitry or the like for the resonant members 44, e.g. to program the device and fuse the resonant member tethers, e.g. as discussed in the co-pending patent International Patent Application PCT/AU2007/001800, entitled "Addressing Apparatus and Methods". Such circuitry too may be made resistant to ionizing radiation, and may for example use Schottky diodes, as well as other active and passive electronic components that are intrinsically radiation hard. This may also include resistor, capacitor and inductor circuitry.

It will be appreciated that the aircraft blade inspection system 10 is merely one illustrative example of an inspection system in which items are subject to ionizing radiation in a non-sterile environment, and in which items being sterilised can be tracked by an RFID device including a data store formed by micromechanical resonant members that respond to an applied RF interrogation signal with a data response. Similar systems exist for inspecting sections of railway track, propeller shafts, turbine blades and other items including metallurgical components, and the present invention is suitable for use in identifying and tracking items in each of these inspection systems.

It will be further appreciated that many systems exist in which items requiring to be identified and tracked are subject to ionizing radiation without necessarily inspected for structural integrity. This situation arises where items are intended for use with or forming at least part of artificial satellites, spacecraft, aircraft, nuclear power stations and nuclear weapons. Once again, the present invention is suitable for use in identifying and tracking such items.

It is to be understood that various alterations, additions and/or modifications may be made to the parts previously described without departing from the ambit of the present invention, and that, in the light of the above teachings, the present invention may be implemented in a variety of manners as would be understood by the skilled person.

The present application may be used as a basis for priority in respect of one or more future applications, and the claims of any such future application may be directed to any one feature or combination of features that are described in the present application. Any such future application may include one or more of the following claims, which are given by way of example and are non-limiting with regard to what may be claimed in any future application.

## Claims

1. A method of identifying an item, the method including the steps of:
applying an RFID tagging device (28) to the item, said tagging device including a data store (40) formed from an array of micromechanical resonant members (44), said resonant members being configured to vibrate in accordance with an applied RF signal, so as to provide a data response;
subjecting the item to ionizing radiation in a non-sterile environment; and
reading the data response from the RFID tagging device.

2. The method of claim 1, wherein the ionizing radiation includes any one or more of x-rays, gamma rays, beta particles, neutrons and alpha particles.

3. The method of any preceding claim, wherein said resonant members (44) are configured for vibration under a Lorentz force.

4. The method of any preceding claim, wherein said RFID device (28) is encased in an irradiation resistant outer cover (58).

5. The method of any preceding claim, wherein said RFID device includes support circuitry (42) for said resonant members (44) formed from irradiation resistant components.

6. A system of tracking RFID tagged items through a process in which each item is subject to ionizing radiation in a non-sterile environment, the system including an inventory controller (30) in communication with one or more RFID readers (32) for reading said tagged items, wherein said items are tagged by RFID devices (28), and said RFID device including a data store (40) formed by micromechanical resonant members (44) that respond to an applied RF interrogation signal with a data response.

7. A system of inspecting an item, including:
a radiation emitter (14) for applying ionizing radiation to the item;
a radiation receiver (18) for receiving and analysing radiation applied to the item; and
a system of tracking RFID tagged items according to claim 6.

## Patentansprüche

1. Ein Verfahren zum Identifizieren eines Objekts, wobei das Verfahren die Schritte umfasst:
Anbringen einer RFID-Tag-Einrichtung (28) an ein Objekt, wobei die Tag-Einrichtung einen aus einer Anordung von mikromechanischen Resonanzelementen (44) bestehenden Datenspeicher (40) aufweist, wobei die Resonanzelemente so konfiguriert sind, dass sie gemäß einem eingestrahlten RF-Signal schwingen, um eine Datenantwort bereitzustellen,
Aussetzen des Objekts gegenüber ionisierender Strahlung in einer nicht-sterilen Umgebung und
Auslesen der Datenantwort der RFID-Tag-Einrichtung.

2. Verfahren nach Anspruch 1, wobei die ionisierende Strahlung Röntgenstrahlen, Gammastrahlen, Beta-Teilchen, Neutronen und Alpha-Teilchen oder eine Kombination derer umfasst.

3. Verfahren nach einem der vorhergehenden Ansprüche, wobei die Resonanzelemente (44) zur Schwingung bei Einwirkung einer Lorentz-Kraft konfiguriert sind.

4. Verfahren nach einem der vorhergehenden Ansprüche, wobei die RFID-Einrichtung (28) in einer strahlungsbeständigen äußeren Hülle (58) eingeschlossen ist.

5. Verfahren nach einem der vorhergehenden Ansprüche, wobei die RFID-Einrichtung eine aus strahlungsbeständigen Komponenten ausgebildete unterstützende Schaltung (42) für die Resonanzelemente (44) aufweist.

6. Ein System zur Verfolgung RFID-markierter Objekte nach einem Verfahren, in dem jedes Objekt ionisierender Strahlung in einer nicht-sterilen Umgebung ausgesetzt ist, wobei das System einen Bestands-Controller (30) aufweist, der mit einem oder mehreren RFID-Lesegeräten (32) zum Erfassen der markierten Objekte kommuniziert, wobei die Objekte durch RFID-Einrichtungen (28) markiert sind und wobei die RFID-Einrichtung einen aus mikromechanischen Resonanzelementen gebildeten Datenspeicher (40) aufweist, die auf ein abgesetztes RF-Abfragesignal mit einer Datenantwort antworten.

7. Ein System zum Prüfen eines Objektes, aufweisend:
einen Strahlungsemitter (14) zum Bestrahlen des Objekts mit ionisierender Strahlung,
einen Strahlungsempfänger (18) zum Empfangen und Analysieren von zum Bestrahlen des Objekts verwendeter Strahlung und
ein System zur Verfolgung RFID-markierter Objekte nach Anspruch 6.

## Revendications

1. Procédé d'identification d'un article, le procédé comprenant les étampes :
d'application d'un dispositif d'étiquetage RFID (28) à l'article, ledit dispositif d'étiquetage comprenant un magasin de données (40) formé à partir d'un réseau d'organes résonants micromécaniques (44), lesdits organes résonants étant configurés pour vibrer en conformité avec un signal RF appliqué, de façon à fournir une réponse de données ;
de soumission de l'article à un rayonnement ionisant dans un environnement non stérile ; et
de lecture de la réponse de données en provenance du dispositif d'étiquetage RFID.

2. Procédé selon la revendication 1, dans lequel le rayonnement ionisant comprend un ou plusieurs parmi des rayons X, des rayons gamma, des particules bêta, des neutrons et des particules alpha.

3. Procédé selon l'une quelconque des revendications précédentes, dans lequel lesdits organes résonants (44) sont configurés pour vibrer sous une force de Lorentz.

4. Procédé selon l'une quelconque des revendications précédentes, dans lequel ledit dispositif RFID (28) est inséré dans un capot externe résistant à l'irradiation (58).

5. Procédé selon l'une quelconque des revendications précédentes, dans lequel ledit dispositif RFID comprend une circuiterie de support (42) pour lesdits organes résonants (44) formée à partir de composants résistant à l'irradiation.

6. Système de suivi d'articles étiquetés par RFID via un processus dans lequel chaque article est soumis à un rayonnement ionisant dans un environnement non stérile, le système comprenant une unité de commande de répertoire (30) en communication avec un ou plusieurs lecteur(s) RFID (32) pour lire lesdits articles étiquetés, dans lequel lesdits articles sont étiquetés par des dispositifs RFID (28), et ledit dispositif RFID comprenant un magasin de données (40) formé par des organes résonants micromécaniques (44) qui répondent à un signal d'interrogation RF appliqué avec une réponse de données.

7. Système d'inspection d'un article, comprenant :
un émetteur de rayonnement (14) permettant d'appliquer un rayonnement ionisant à l'article ;
un récepteur de rayonnement (18) permettant de recevoir et d'analyser un rayonnement appliqué à l'article ; et
un système de suivi d'articles étiquetés par RFID selon la revendication 6.
